Europäisches Patentamt

European Patent Office

Office européen des brevets

(11) Publication number: **0 067 898**

**B1**

(12) **EUROPEAN PATENT SPECIFICATION**

(45) Date of publication of patent specification: 02.04.86

(51) Int. Cl.⁴: **G 07 D 7/00**

(21) Application number: **81104817.2**

(22) Date of filing: **22.06.81**

(54) System for identifying currency note.

(43) Date of publication of application:
**29.12.82 Bulletin 82/52**

(45) Publication of the grant of the patent:
**02.04.86 Bulletin 86/14**

(84) Designated Contracting States:
**AT DE GB IT**

(56) References cited:
**EP-A-0 012 723**
**EP-A-0 012 724**
**WO-A-81/01211**
**DE-A-2 809 707**
**DE-A-2 945 651**
**DE-A-3 040 963**
**FR-A-2 196 494**
**FR-A-2 349 863**
**FR-A-2 370 327**
**GB-A-2 064 111**
**US-A-3 781 553**
**US-A-4 041 456**
**US-A-4 131 879**
**US-A-4 143 279**
**US-A-4 156 231**

(73) Proprietor: **Kabushiki Kaisha Toshiba**
**72, Horikawa-cho Saiwai-ku**
**Kawasaki-shi Kanagawa-ken 210 (JP)**

(72) Inventor: **Nishito, Akihiro**
**Sejima-so, 2-107 Furuichiba**
**Saiwai-ku Kawasaki-shi (JP)**
Inventor: **Ohtombe, Ko**
**2-26-22, Seta**
**Setagaya-ku Tokyo (JP)**
Inventor: **Yamakawa, Susumu**
**Aoba-so H, 5 Shirahata-Nishimachi**
**Kanagawa-ku Yokohama-shi (JP)**
Inventor: **Nakamura, Yasushi**
**2-27, Kakinokidai**
**Midori-ku Yokohama-shi (JP)**

(74) Representative: **Henkel, Feiler, Hänzel & Partner**
**Möhlstrasse 37**
**D-8000 München 80 (DE)**

(56) References cited:
**US-A-4 179 685**
**US-A-4 255 057**
**US-A-4 255 652**

Courier Press, Leamington Spa, England.

**0 067 898**

(56) References cited:
MICROELECTRONICS JOURNAL, vol. 10, no. 1
(1979) Mackintosh Publications Ltd. Luton, GB
C. TASSELL et al.: "Photodiode arrays-
characteristics and applications", pages 35-43

PROCEEDINGS 1979 CARNAHAN
CONFERENCE ON CRIME
COUNTERMEASURES, May 16-18, 1979
University of Kentucky, Lexington, Kentucky,
US W. SZEPANSKI: "A signal theoretic method
for creating forgery-proof documents for
automatic verification" pages 101-109

## Description

This invention relates to a printed matter identification system for identifying the kind and authenticity of printed matter such as currency notes.

With the recent spread of vending machines, money changers, bank terminal machines etc., systems for examining and verifying the kind and authenticity of currency notes (bank notes) such as one dollar notes, ten dollar notes, one hundred notes, etc. are becoming important.

Various systems for identifying different kinds of currency notes have hitherto been developed. For example, document US—A—4 179 685 discloses a system which detects the edges of a currency note, extracts a binary pattern for a predetermined portion of the currency note between the detected edges thereof, calculates the degree of coincidence between the extracted binary pattern and a standard binary pattern and determines the examined currency note to be a genuine note if a predetermined degree of coincidence is obtained between the two binary patterns. This known system comprises scanning means for scanning successive lines of the current note in a direction perpendicular to its motion direction, a currency note edge sensor and identification means including storages, memories, comparison and processing means calculating the similarity from the currency notes being checked and standard pattern data in order to determine whether the currency note meets the above mentioned predetermined degree of coincidence.

Furthermore, document WO 81/01211 discloses a security validator having a photosensor which, upon sensing the leading edge of a paper being checked, actuates a counter to begin counting the output pulses of a chopper-sensor assembly.

Thus, both the system known from US—A—4 179 685 and the security validator disclosed in WO 81/01211 comprise a leading edge sensor which detects the leading edge of the paper or currency note being checked.

Many currency notes have disfigurements as deviations of printing position, wrinkles and contaminations, and with such currency notes great fluctuations of the binary pattern data result from the wrinkles and contaminations; sometimes the examined currency note is not identified as a genuine note due to wrinkles or contaminations causing excessive fluctuations of the binary pattern. Such disfigurements are apt to be caused especially on the edge portion of currency notes.

In order to cope with the deviations of the printing position of bank notes, it has been proposed to provide a deviation or skew detector and compare the detected pattern with a number of standard patterns provided for respective deviations or skew angles. Such a method of identification, however, requires a large scale and hence high price apparatus.

An object of the invention, accordingly, is to provide a printed matter identification system, which permits the identification of printed matter with high accuracy, at a high speed and with a small scale apparatus, and which avoids influences caused by disfigurements of the edge portions of, for example, currency notes.

According to the invention, there is provided a printed matter identification system, comprising:

1. transport means for moving the printed matter in a first direction,
2. scanning means comprising:
   2.1 a light beam source for emitting a light beam directed to the matter and scanning successive lines of the printed matter in a direction perpendicular to the first direction,
   2.2 a light sensor receiving the reflected light beam and converting said reflected light beam into a pattern data corresponding to at least a portion of the moving printed matter,
3. a bill edge sensor producing an output when detecting the edge of the bill and located transversely to the motion axis,
4. standard data generating means for generating data corresponding to a standard pattern of standard printed matters,
5. identification means, comprising:
   5.1 storage means for retaining the scanned pattern information,
   5.2 memory means for storing the standard pattern data,
   5.3 comparison means for comparing the scanned pattern information from the storage means with the stored standard data from the memory means in synchronism with the bill edge sensor, and producing an output signal upon occurrence of predetermined amount of information, and
   5.4 processing means analysing said output signal and calculating the similarity from the printed matter being checked and the standard pattern data,

said printed matter identification system being characterized in that it furthermore comprises:

6. pattern edge detecting means detecting at leaft one pattern edge data component corresponding to at least one pattern edge of the printed matter by differentiating the scanned pattern signal,
7. summing means for summing the picture element signals in each of the scanning signals for each successive scanning lines
8. characteristic pattern data detecting means which detect characteristic pattern data corresponding to a predetermined area from the detected pattern edge in response to the pattern edge component, and
9. being further characterized in that the comparison means are branched in such a manner that the summed characteristic pattern data for each scanning line is comparised with the memorised standard pattern data.

The identification system according to the present invention performs the printed matter identification on the basis of the detection of the printed edge of the printed matter and a predetermined area from the printed edge. Accordingly, it is possible to obtain high performance identification without a substantial affect of contaminations, shrinkage, wrinkles, creases etc., which are apt to be caused especially on the edge portion of currency note and the like. Furthermore, the identification system according to the present invention uses the pattern data for each scanning line, i.e., data obtained by adding picture elements of one scanning line, so that the printed matter is not erroneously identified due to the position displacement of the printed matter.

This invention can be more fully understood from the following detailed description when taken in conjunction with the accompanying drawings, in which:

Fig. 1 is a plan view showing a bank note examined with one embodiment of the currency note identification system according to the invention.

Fig. 2 is a block circuit diagram showing one embodiment of the currency note indentification system according to the invention.

Fig. 3 is a time chart showing a scanning signal and timing signals.

Fig. 4 is a view illustrating the processing of the scanning signal.

Fig. 5 is a view showing a data detection area of a bank note.

Fig. 6 is a view showing data of bank note stored in a memory.

Fig. 7 is a view showing the similarity of detected waveform to standard waveform.

Fig. 8 is a waveform chart showing a sum signal.

Fig. 9 is a block circuit diagram showing a different embodiment of the currency note identification system.

Fig. 10 is block diagram showing a final identification circuit used in the embodiment of Fig. 9.

Fig. 11 is a view showing examples of final identification.

Fig. 12 is a waveform diagram showing a scanning signal for illustrating the principles of a further embodiment of the currency note identification system according to the invention.

Fig. 13 is a block diagram showing the embodiment of the currency note identification system based upon the principles shown in Fig. 12.

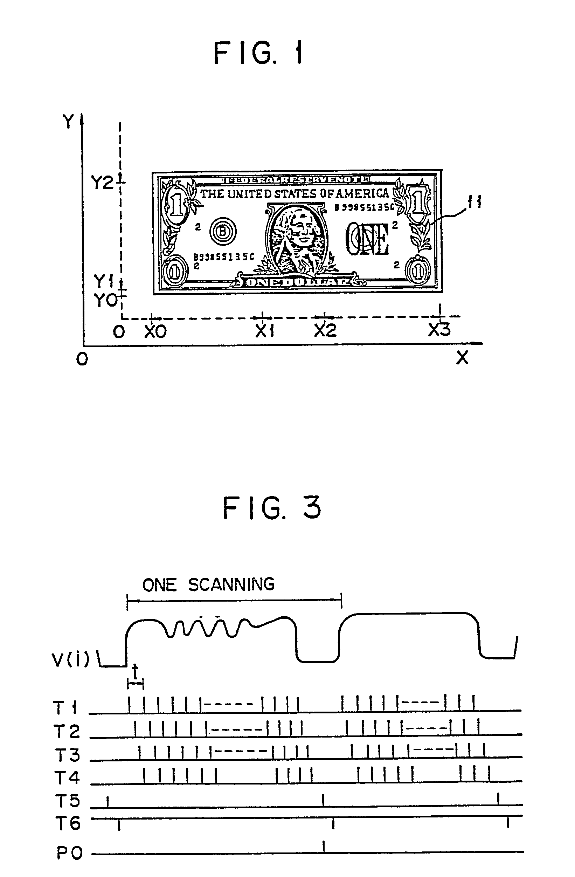

Fig. 1 shows a currency note, e.g., a one-dollar bill 11. This bill 11 is scanned, for instance by a line sensor, in the direction of X-axis shown as main scanning and is conveyed, for instance by a conveyor, in the direction of Y-axis as auxiliary scanning. The X- and Y-axis scannings cover a sufficiently broad area of the bill, and an area between points $X_1$ and $X_2$ in the X-axis direction and between points $Y_1$ and $Y_2$ in the Y-axis direction is one from which data necessary for the identification is extracted. For the detection of the information extraction area between the points $X_1$

and $X_2$ and between the points $Y_1$ and $Y_2$, the printed section of the bill can be easily and reliably detected by having resort to the change of the printing density of the printed section. Generally, the bill has a frame-like margin, which is a nonprinted section and encloses a printed section which has an impression of various patterns, characters, a portrait, etc. As the printed section is finely scanned, for instance by a light beam, the intensity of the reflected or transmitted light changes in a predetermined manner. Thus, the photoelectric conversion signal (scanning signal) from a line sensor which has a function of scanning the note in the direction perpendicular to the direction of conveying the bill, is not changed for the non-printed margin of the bill and changed for the printed section according to the intensity of light therefrom. Accordingly, the edge of the printed section can be detected by differentiating the scanning signal, detecting only the changes of differentiated scanning signal and checking a predetermined changes.

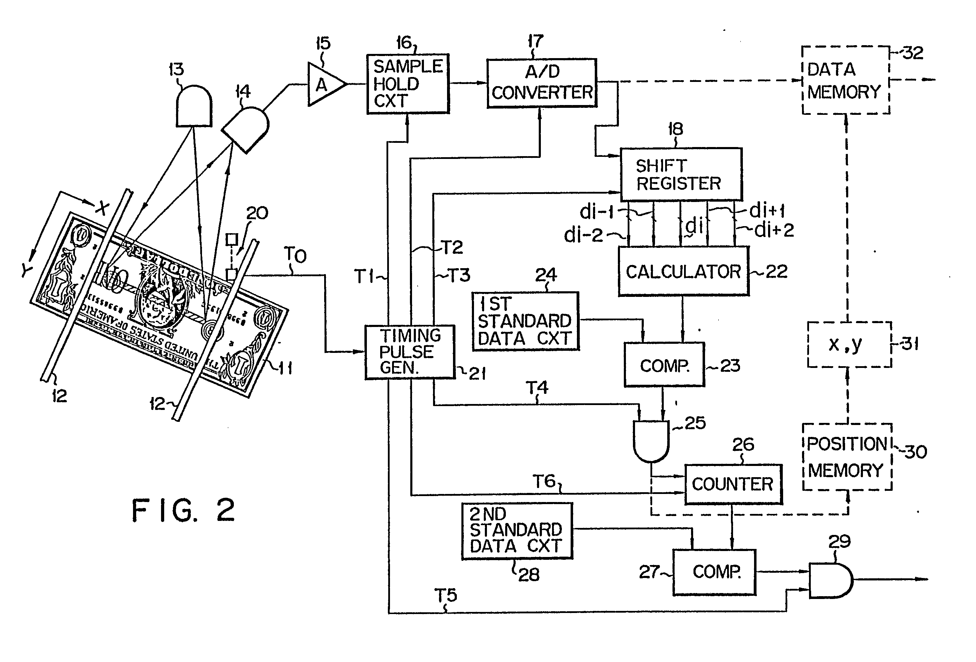

Fig. 2 shows the circuitry of a currency note identification system, which verifies the kind and/or genuineness of a bill 11 from a scanning signal corresponding to a particular portion of the printed section with the edges thereof detected on the basis of the principles discussed above. the bill 11 is conveyed by conveying belts 12 at a uniform speed in the direction of arrow Y, and its detected area A is irradiated from a light source 13. Light reflected from the detected area A is received by a line sensor 14, which has a function of scanning the area in the direction of arrow X. The line sensor 14 may be a CCD line sensor having, for instance, 128 picture elements. The output end of the line sensor 14 is coupled through a video amplifier 15 to the input terminal of a sample/hold circuit 16. The output of the sample/hold circuit 16 is coupled through an analog-to-digital (A/D) converter 17 to the input side of a shift register 18 and a data memory 32. A photo switch 20 which detects the edge of the bill 11 has its output terminal connected to the input terminal of a timing pulse generator 21. The timing pulse generator 21 has its timing pulse output ends connected respectively to the timing pulse input ends of the sample/hold circuit 16, A/D converter 17 and shift register 18. The shift register 18 is formed by five shift register stages with the output ends thereof connected to the respective input end of a calculator 22. The calculator 22 has its output end connected to one of input ends of a comparator 23, to the other input end of which is connected the output end of a first standard data circuit 24. The first standard data circuit 24 includes a memory where standard data as to various bills is stored. The output end of the comparator 23 and a timing pulse output end of the timing pulse generator 21 are connected to respective input ends of an AND gate 25, and the output end thereof is connected to an input end of a counter 26. The counter 26 has its output end connected to one input end of a comparator 27, to the other input end of which is connected to the output end of a second standard data circuit 28. The standard data circuit 28 includes a memory where standard data of the printing densities of the printed sections of various bills is stored. The output end of the comparator 27 and a timing pulse output end of the timing pulse generator 21 are connected to respective input ends of an AND gate 29. The AND gate 29 provides a signal $P_0$ representing the result of comparison in synchronism to a timing pulse $T_5$. The output end of the AND gate 25 is also connected to a position memory 30, which has its output end connected to the input end of a position calculator circuit 31. The position calculator circuit 31 has its output end connected to a data memory 32, to which the output end of the A/D converter 17 is also connected.

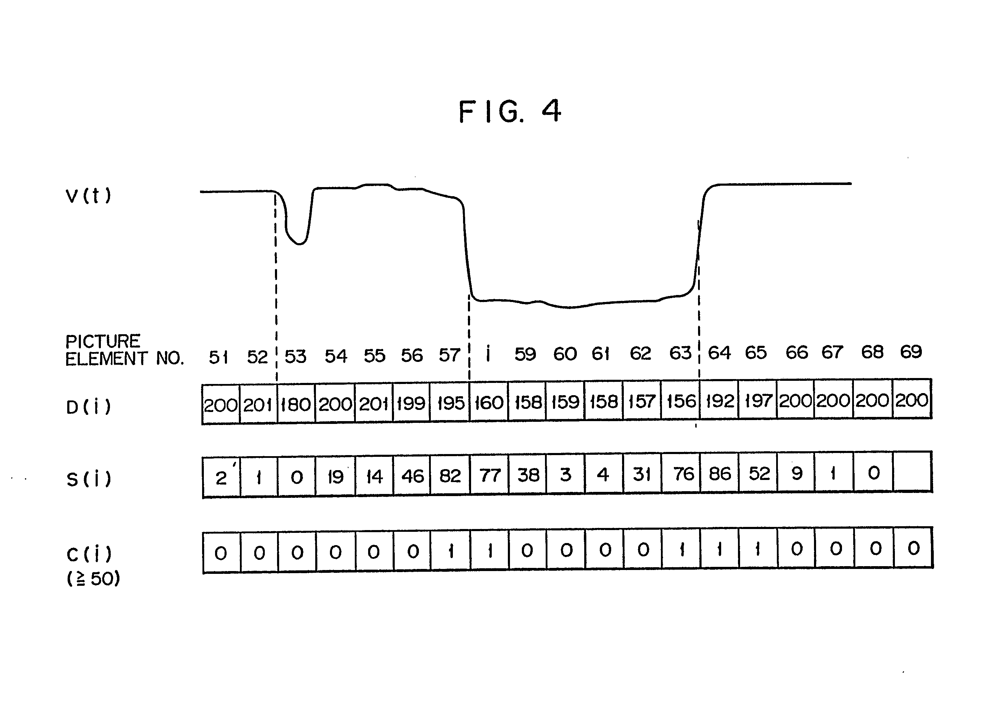

In the currency note identification system described above, the line sensor 14 outputs a scanning signal V(i) [i=1 to 128] as shown in Fig. 3, and this scanning signal V(i) is amplified by the amplifier 15 before it is supplied to the sample/hold circuit 16. Meanwhile, when the photo switch 20 provides a trigger signal to the timing pulse generator 21 in response to the edge of the bill 20, the timing pulse generator 21 provides timing pulses $T_1$ to $T_6$ as shown in Fig. 3. The sample/hold circuit 16 samples the scanning signal V(i) in response to the timing pulses $T_1$, and the sampled signal is supplied to the A/D converter 17. The A/D converter 17 converts the sampled scanning signal into an 8-bit digital signal D(i) [i=1 to 128] in synchronism to the timing pulses $T_2$. When the 8-bit digital signal D(i) enters the shift register 18, it is progressively shifted through the five stages in synchronism to the timing pulses $T_3$, and parallel signals d(i−2), d(i−1), d(i), d(i+1) and d(i+2) [i=3 to 126] are supplied from the shift register 18 to the calculator 22. The calculator 22 performs processing on the input parallel signals according to an equation

$$S(i)=|\{d(i-2)+d(i-1)-[d(i-1)+d(i-2)]\}| \quad (1)$$

This operation will now be explained with reference to Fig. 4. The parallel signals of the shift register 18, i.e., signals corresponding to five picture elements, are substituted into the equation (1); for example, digital signals 199, 195, 160, 158 and 159 corresponding to the respective five picture elements of the picture element numbers 56 (di−2)), 57 (d(i−1)), i, 59 (d(i+1)) and 60 (d(i+2) centered on i are substituted, that is,

$$S(i)=|\{199+195-[159+159]\}|=77$$

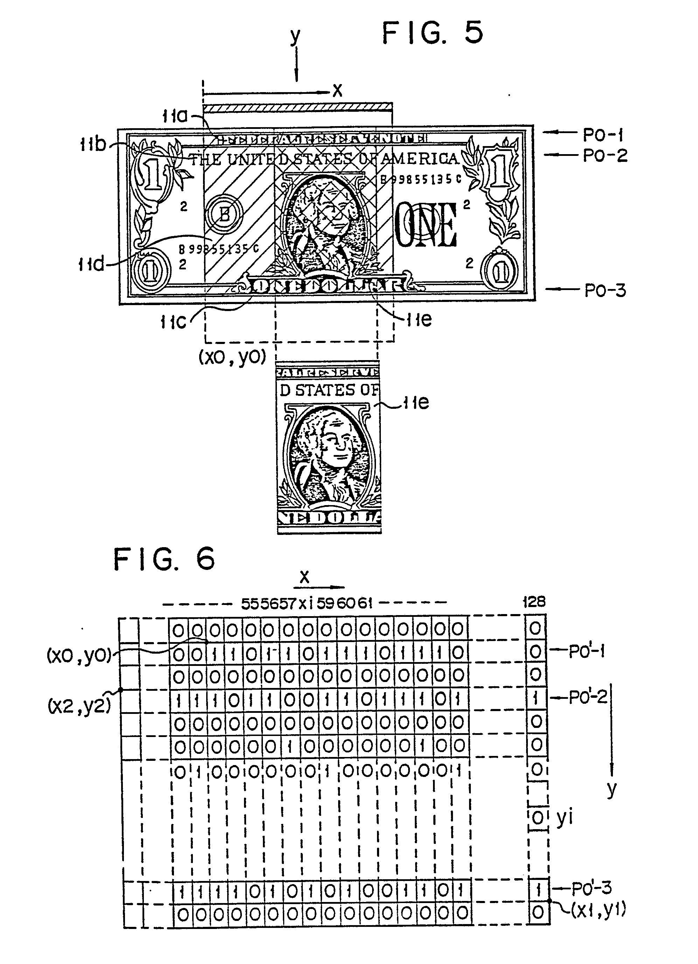

Briefly, the numerical values 119, 115, 160, 158 and 159 are multiplied by respective factors 1, 1, 0, −1 and −1, and the products are added together to obtain S(i). In this way, S(i) is obtained very time D(i) is shifted through one stage. The signal S(i) is compared in the comparator 23 with a first standard data, for instance of a value 50. If S(i)≧50, the comparator 23 provides output of "1", and this signal "1" is provided from the AND gate 25 in response to a timing pulse $T_4$. This output of the and gate 25, i.e., a signal C(i), is supplied to the counter 26. The counter 26 is cleared for every scanning cycle period in response to the timing pulse signal $T_6$ to count, for instance, "1"s in the signal C(i). When the "1"s in one scanning period are counted by the counter 26, the count G is compared in the comparator 27 with a second standard data of the second standard data circuit 28. If G≧ the second standard data, a character row detection signal $P_0$ is provided through the AND gate 29 in response to a timing pulse $T_5$. In this way, detection signals $P_{0-1}$, $P_{0-2}$ and $P_{0-3}$ are provided for respective character rows 11a, 11b and 11c as shown in Fig. 5. The detection signal $P_{0-1}$ which is provided first, is identified as the first character row 11a, i.e., the edge of the printed section of the bill 11, and necessary information (representing brightness, color hue, etc.) is obtained from the information corresponding to the data detection area 11d extending in the direction of arrow Y from the character row 11a as the leading edge of the area.

In this embodiment, a character row detection signal is provided when the line sensor 14 completes one scanning, and the character rows in the Y direction is detected on real time. Alternatively, the signal C(i) provided through the AND gate 25 may be supplied to and stored in the position memory 30 as shown by a broken line, for obtaining the character row detection signal $P_0$ from the data stored in the position memory 30. In this case, the position calculation circuit 31 calculates the necessary starting point (x, y) of the data detection area 11e from the data stored in the position memory 30. In the stored data shown in Fig. 6, the start point of the area 11e is shown as $x°$, $y°$, and the end point is shown as $(x_1, y_1)$ in the detection signal $P_{0-3}$. The data detection start point is shown by $(x_2, y_2)$, and the data detection area corresponding to the detection signal $P_{0-2}$ is determined from this point.

While in the above embodiment the signal S(i) for the picture element of the picture element number i is calculated by the five stage-shift register 18 and calculator 22 so that the signal S(i) will not be affected by wrinkles or local contaminations of the currency note, the number of stages of the shift register 18 may be increased or reduced depending upon the state of the currency note. Also, in case if there is no need of considering the effects of wrinkles or local contaminations of the currency note, the shift register and calculator may be replaced with an analog differentiating circuit (i.e., CR differentiating circuit) for differentiating an analog scanning signal. In this case, an analog comparator is used as the comparator 23.

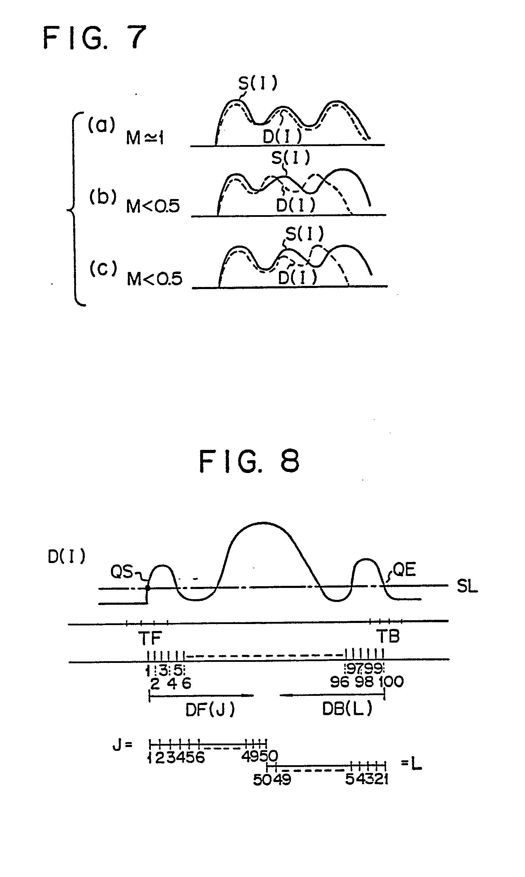

Fig. 7 shows the relation between the detected pattern D(I) and standard pattern S(I). In (a), the detected pattern D(I) and standard pattern S(I) are shown to be ideally similar, that is, the similarity between them is M≃1. In (b), the detected pattern D(I) shown in deviated in phase from the standard pattern S(I) due to a shrinkage of the currency note examined. In this case, the similarity is M<0.5. The currency note in this case is rejected. In (c), the detected pattern D(I) is deviated particularly outstandingly for the second half from the standard pattern S(I) due to a crease formed in the currency note at the center thereof by the folding thereof. In this csae, the similarity is M<0.5, and the currency not is rejected. As is shown, even with the above embodiment currency notes having outstanding shrinkage, wrinkles or crease sometimes fail to be verified. Such currency notes, however, may be verified by determining the similarity at a plurality of points as in the following embodiment.

As shown in Fig. 8, a detected pattern D(I) is sampled at, for instance, 100 points inclusive of the start and end points $Q_S$ and $Q_E$. The data for 50 sampling points from the start points $Q_S$ of the detected pattern D(I) [I=1 to 100] is labeled DF(J) [J=1 to 50], and the data for 50 sampling points from the end point $Q_E$ is labeled DB(L) [L=1 to 50]. For the standard pattern, the data for 50 sampling points from the start point are preset as SF(J) [J=1 to 50], and the data for 50 sampling points from the end point are preset as BS(L) [L=1 to 50]. The first similarity $M_F$ with the start point $Q_S$ as the first point is obtained as

$$M_F = \frac{\sum\limits_{J=1}^{50} DF(J) \cdot SF(J)}{\sqrt{\sum\limits_{J=1}^{50} \{DF(J)\}^2} \cdot \sqrt{\sum\limits_{J=1}^{50} \{SF(J)\}^2}} \qquad (2)$$

Likewise, the second similarity $M_B$ with the end point $Q_E$ as the first point is obtained as

$$M_B = \frac{\sum\limits_{L=1}^{50} DB(L) \cdot SB(L)}{\sqrt{\sum\limits_{L=1}^{50} DB(L)} \cdot \sqrt{\sum\limits_{L=1}^{50} SB(L)}} \qquad (3)$$

While various combinations of the above two similarities are conceivable, in this embodiment the average value of both the similarities $M_F$ and $M_B$, i.e., the average similarity

$$M=(M_F+M_B)/2,$$

is obtained, and the identification of currency notes is made according to this average similarity M. Where a plurality of different kinds of currency notes are dealt with for identification, the average similarity M is obtained for each of a plurality of standard waveform data for the respective different standard currency notes, and the standard waveform data for which the similarity M is maximum is detected to identify the kind of the currency note examined. In the illustrated embodiment, five similarity degrees $M_1$, $M_2$, $M_3$, $M_4$ and $M_5$ are obtained with respect to respective different bills, namely one dollar, five dollar, ten dollar, fifty dollar and one hundred dollar bills, and the maximum similarity is detected from among these similarities $M_1$ to $M_5$ to identify the currency note as that of the corresponding kind. In the above-mentioned embodiment, sampling is effected with the detection waveform divided into 100 points as measured from the leading edge $Q_S$ to the trailing edge $Q_E$ thereof, thereby obtaining data on the 50 sample points from the leading edge $Q_S$ and data on the 50 sample points from the trailing edge $Q_E$. However, it is also possible to obtain data on the 50 sample points from the leading edge and data on the 50 sample points from the trailing edge with the detection waveform divided into 120 points as measured from the leading edge $Q_S$ to the trailing edge $Q_E$.

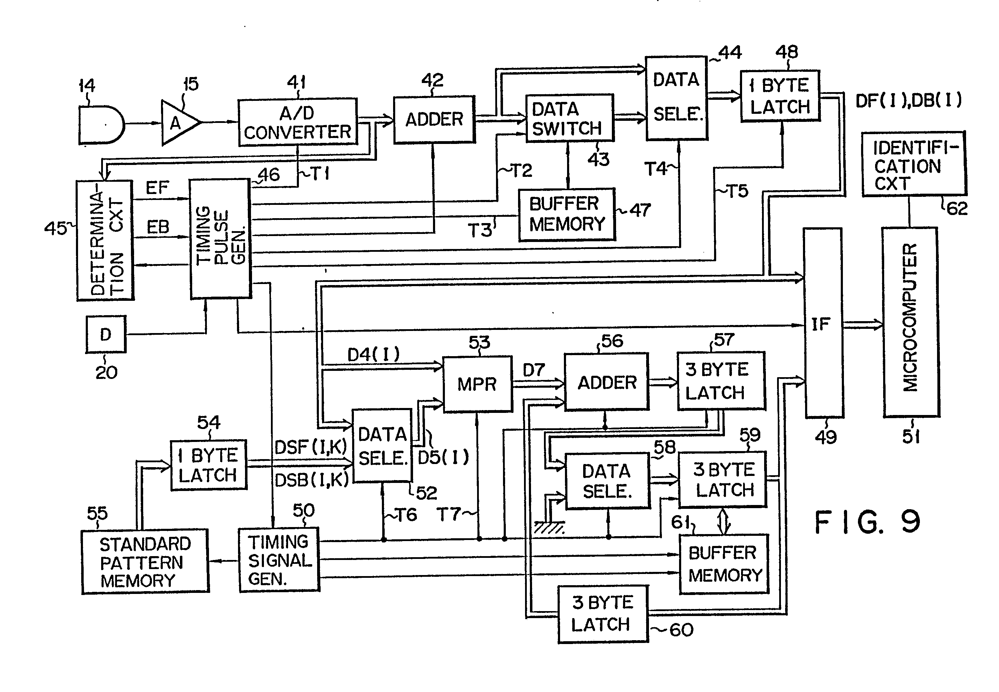

Fig. 9 shows a block circuit diagram of the currency note identification system using the average similarity mentioned above. In this circuit, the output end of the CCD line sensor 14, which has 512 picture elements, is connected through the amplifier 15 to the input end of an 8-bit A/D converter 41, which has its output end connected to the input ends of an adder 42 and a signal detection area determination circuit 45. The output end of the adder 42 is connected through a data switch 43 to the input end of a data selector 44 and is also directly connected to the input end of the data selector 44. The signal detection area determination circuit 45 has output ends connected to trigger input ends of a timing pulse generator 46, which has output ends respectively connected to the control input ends of the A/D converter 41, the data switch 43, a buffer memory 47, the adder 42, a one-byte latch circuit 48, an interface circuit 49 and a second timing pulse generator 50. The buffer memory 47 is connected to the data switch 43, and the output end of the data selector 44 is connected to the input end of the one-byte latch circuit 48. The output end of the latch circuit 48 is connected through the interface circuit 49 to the input end of a microcomputer 51, and is also connected to one of input ends of the data selector 52 and also to one of input ends of a multiplier 53. A standard pattern memory 55 has its output end connected through a one-byte latch circuit 54 to another input end of the data selector 52, and the output end thereof is connected to another input end of the multiplier 53. The output end of the multiplier 53 is connected to one of input end of an adder 56, which has its output end connected through a three-byte latch circuit 57 to one of input ends of a data selector 58, which in turn has its output end connected through a three-byte latch circuit 59 to another input end of the interface circuit 49 and also connected to the input end of a three-byte latch circuit 60. The output end of the three-byte latch circuit 60 is connected to the other input end of the adder 56.

A buffer memory 61 is connected to a one-byte latch circuit 59. The second timing pulse generator 50 supplies timing pulses $T_1$ to $T_5$ respectively to the standard pattern memory 55, data selector 52, multiplier 53, adder 56, three-byte latch circuit 57, three-byte latch circuit 59 and buffer memory 61 in response to an output pulse $T_0$ of the photo switch 20. The output end of the microcomputer 51 is connected to the input end of a final identification circuit 62.

In this embodiment, the line sensor 14 provides a scanning signal V(i) [i=1 to 512] including 512 picture element signals corresponding to respective picture elements for every scanning. The scanning signal V(i) is coupled through the amplifier 15 to the A/D converter 41, which converts the individual picture element signals at levels corresponding to the intensity of light incident on the picture elements of the line sensor into corresponding 8-bit digital picture element signals. These 512 digital picture element signals are inputted to the adder 42 and the signal detection area determination circuit 45. The average value of these picture element signals is calculated by an adder 42. The digitial signal D(i) presenting the average value, obtained from the adder 42, is supplied to data switch 43 and data selector 44. The data switch 43 is switched in response to the timing pulse $T_2$ to transfer the output signal D(i) of the adder 42 to the buffer memory 47 or transfer the data D(i) stored in the buffer memory 47 to the data selector 44. The data selector 44 selects the signal $D_1(i)$ and supplied it to the latch circuit 48 for a first period $T_F$ and selects the signal $D_2(i)$ read out from the buffer memory 47 and supplies to the latch circuit 48 for a second period $T_B$ in response to the timing pulse $T_4$. The latch circuit 48 provides N/2 sampled data DF(I) for the 50 points from the start point $Q_S$ for the first period $T_F$ and N/2 sampled data DB(L) for the 50 points from the end point $Q_E$ in response to the timing pulse $T_5$. In the first period $T_F$, the data DF(I) are supplied to the data selector 52 and multiplier 53. A signal DSF(I, K) which represents a standard pattern for the first period $T_F$, is supplied from the standard pattern memory 55 through the latch circuit 54 to the data selector 52. The data selector 52 selects the signal DF(I) or DSF(I, K) and supplies it as a signal $D_5(I)$ to the multiplier 53 in response to the timing signal $T_6$. The multiplier 53 first calculates the product of DF(I) and DF(I), i.e., $DF(I)^2$, and then calculates the product of DF(I) and DSF(I, K), i.e., $DF(I) \cdot DSF(I, K)$, and it supplied the result as a signal D7 to the adder 56. On the signal D7, calculations according to the equations

$$QF = \sum_{I=1}^{50} (DF(I))^2, \qquad (4)$$

$$RF(K) = \sum_{I=1}^{50} DF(I) \cdot DSF(I, K) \qquad (5)$$

are made through the adder 56, three-byte latch circuit 57, data selector 58, three-byte latch circuit 59, buffer memory 61 and three-byte latch circuit 60. The signals QF and RF(K) are supplied to the interface circuit 49. The interface circuit 49 supplied the signals DF(I), QF and RFS(I, K) to the microcomputer 51. The microcomputer 51 calculates the similarity M(K) according to a predetermined program. The similarity MF(K) is calculated according to an equation

$$MF(K) = RF(K)/\sqrt{QF} \cdot \sqrt{ZF(K)} \qquad (6)$$

where ZF(K) is the summation of the squares of the individual standard waveform data DSF(I, K) which is stored in a memory of the microcomputer 51. When the similarity with respect to the data DF(I) for the first period $T_F$ is obtained in the above way, the similarity with respect to the data DB(L) for the second period $T_B$ is then obtained in the manner as described. In this case, the standard waveform data DBS(I, K) and detected data DB(I) are supplied to the data selector 52.

In the microcomputer 51, the determination of the kind of the currency note examined, i.e., the determination as to if the currency note is a genuine one dollar bill, ten dollar bill, one hundred dollar bill, etc., is effected with respect to the individual data DF and DB. The final identification circuit 62 makes the final identification on the basis of the result of determination.

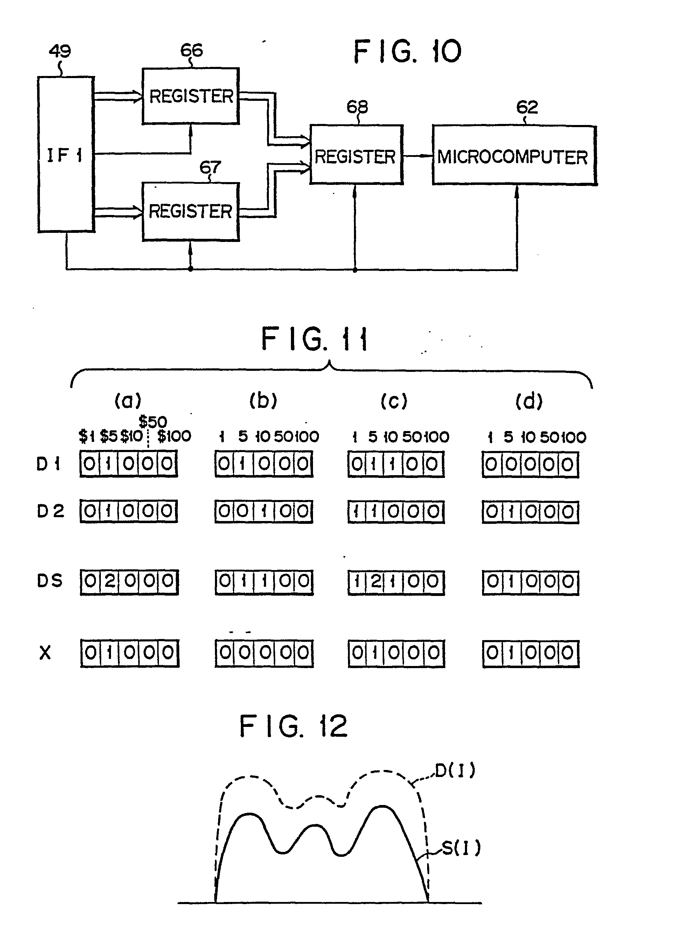

The final identification circuit 62 will now be described in detail with reference to Fig. 10. The interface circuit 49 has output ends connected to registers 66 and 67, which are included in the microcomputer 51 and serve to determine the currency note kind with respect to respective first and second areas. The registers 66 and 67 have their output ends connected to input ends of a summing register 68, which has its output end connected to the input end of the final identification circuit 62.

In the determination with respect to the first area, if the five-dollar bill, for instance, is detected as one with respect to which the similarity MF(K) calculated from the data DF(I) is above a predetermined reference value (which is 0.6 in this embodiment), a five-dollar bill flag in the first area determination register 66 is set to "1" while the other flags, namely one-dollar, ten-dollar and one hundred-dollar bill flags, all set to "0". Likewise, if in the determination with respect to the second area the five-dollar bill is detected as one with respect to which the similarity calculated from the data DB(L) for this area is above a reference value of 0.6, a five-dollar bill flag in the second area determination register 67 is set to "1" while the other flags are all set to "0". The summing register 68 adds the contents of the first and second area determination registers 66 and 67, and the final identification circuit 62 detects the flag, for which the sum is maximum, from the content of the summing register 68 and identifies the examined bill as the corresponding bill, namely the five-dollar bill.

The above method of identification will be described in more detail with reference to Fig. 11. In an example (a) in Fig. 11, the five-dollar bill is detected with respect to both the first and second areas as shown at $D_1$ and $D_2$, and "2" is obtained as the sum $D_S$ of the five-dollar bill flag values. Thus, the result X of the final identification is "1" for the five-dollar bill, and the bill examined is identified as the five-dollar bill. In an example (b) in Fig. 11, the five-dollar bill is detected with respect to the first area, while the ten-dollar bill is detected with respect to the second area, and the sum $D_S$ of the flag values is "1" for both five-dollar and ten-dollar bills. In this case, no bill is detected as the result X of final identification, and the bill not examined is thus rejected. In an example (c) in Fig. 11, the five-dollar and ten-dollar bills are detected with respect to the first area, and the one-dollar and five-dollar bills are determined with respect to the second area, and the sum $D_S$ of the flag values is "1" for the one-dollar and ten-dollar bills and "2" only for the five-dollar bill. From these sum data $D_S$, the examined currency note i.e. bill is identified as the five-dollar bill for which the flag value sum is maximum. In an example (d) in Fig. 11, no bill is detected with respect to the first area, and the five-dollar bill is detected with respect to the second area, and the bill examined is identified as the five-dollar bill as the result of the final identification.

As has been shown, in the second embodiment described above the final identification is made on the basis of the determination results with respect to at least two determination areas, so that it is possible to obtain high performance identifying function less prone to mis-judgement.

In the preceding first and second embodiments, the identification of the examined currency note made on the basis of the similarity of the direct current component of the detected data of the currency note, and this method of identification has the following effects.

1) Since the sum of signals for small picture elements in a sufficiently wide area in the main scanning direction is taken, the identification is less subject to the influence of local noises such as those due to creases or wrinkles, and it is possible to identify currency notes with less mis-judgement or rejection. Also, since the identification is not based upon any "1" or "0" signal at an infinitesimal point, the allowable positional deviation or skew of the currency note can be increased.

2) Since the sums of density values in the main scanning direction are detected as successive multi-value patterns and their similarity with respect to a standard multi-value pattern, high performance identification free from the influence of the overall contamination of the currency note is possible.

3) Since the density value sum is obtained for every scanning cycle and the similarity is calculated for the successive cycles, real-time processing is possible, and thus an automatic currency note sorting apparatus which is capable of high speed identification and has a high unit-time processing capacity, can be obtained.

4) Since the density value sum is obtained for every scanning cycle for calculating the similarity for successive cycles, no buffer memory have a high capacity is required. In addition, the standard waveform signal memory may be a far small capacity memory compared to the case of storing two-dimensional image data.

While in the preceding embodiments a digital adder has been used as means for obtaining the sum, the same effects of the invention will also be obtained by using an integrating circuit for obtaining the sum analog-wise. Further, while in the preceding embodiments the detection area in the X-axis direction has been determined on the basis of a portion of the scanning signal corresponding to the borderline between the margin and printed section of the currency note, it is also possible to determine the detection area on the basis of any point so long as the point can be clearly detected from the scanning signal. Further, a fixed detection area in the X-axis direction may be preset in case if the positional deviation of the currency note scanned is within a permissible range. Further, while in the preceding embodiments in the Y-axis direction has been determined on the basis of a portion of the sum signal $D(I)$ corresponding to the borderline between the margin and printed section of the currency note, this is by no means limitative, and any characteristic point of a pattern corresponding to a definite portion of the currency note can be detected. Further, it is possible to determine the detection area in the Y-axis direction not from the sum signal $D(I)$ but from the scanning signal $V(t)$ itself, i.e., from a characteristic data contained in the signal $V(t)$.

Now, a further embodiment, in which the similarity is calculated from the alternating current component of the detected data of the currency note, will be described.

The basic concept underlying this embodiment will first discussed with reference to the waveform shown in Fig. 12. Denoting the detected pattern signal by $D(I)$ and the standard pattern signal by $S(I)$, the similarity $M_{AC}$ of the alternating current component is given as

$$M_{AC}=\frac{\sum_{I=1}^{N}\left\{\left(D(I)-\frac{\Sigma D(I)}{N}\right)\cdot\left(S(I)-\frac{\Sigma S(I)}{N}\right)\right\}}{\left\{\sum_{I=1}^{N}\left(D(I)-\frac{SD(I)}{N'}\right)^2\right\}^{1/2}\cdot\left\{\sum_{I=1}^{N}\left(S(I)-\frac{\Sigma S(I)}{N}\right)^2\right\}^{1/2}} \qquad (7)$$

While the alternating current component of the standard pattern signal S(I) can be calculated in advance, the detected pattern signal D(I) cannot be obtained unless the current note is scanned by the line sensor, that is, the alternating current component of the signal D(I) can be obtained only after the end of the scanning. By re-arranging the equation (7), we obtain

$$M_{AC}=\cfrac{\sum\limits_{I=1}^{N}\{D(I)\cdot S'(I)\}-\cfrac{\Sigma D(I)\cdot \Sigma S'(I)}{N}}{\left\{\sum\limits_{I=1}^{N}S'(I)^2\right\}^{1/2}\cdot\left\{\Sigma(D(I))^2-\cfrac{(\Sigma D(I))^2}{N}\right\}^{1/2}}$$

(8)

where $S(I'=S(I)-(\Sigma S(I)/N)$

Since the sum of the alternating current components S'(I) of the signal S(I) is zero,

$$M_{AC}=\cfrac{\sum\limits_{I=1}^{N}\{D(I)\cdot S'(I)\}}{\left\{\Sigma S'(I)^2\right\}^{1/2}\cdot\left\{\Sigma(D(I))^2-\cfrac{(\Sigma D(I))^2}{N}\right\}^{1/2}}$$

$$=\cfrac{\sum\limits_{I=1}^{N}D(I)\cdot\cfrac{S'(I)}{\{\Sigma S'(I)^2\}^{1/2}}}{\left\{\Sigma(D(I))^2-\cfrac{(\Sigma D(I))^2}{N}\right\}^{1/2}}$$

(9)

By using as the standard pattern signal

$$S''(I)=\cfrac{S'(I)}{\{\Sigma S'(I)^2\}^{1/2}}$$

(10)

then,

$$\alpha=\sum\limits_{I=1}^{N}D(I)\cdot S''(I)$$

(11)

$$\beta=\sum\limits_{I=1}^{N}D(I)$$

(12)

and

$$\gamma=\sum\limits_{I=1}^{N}(D(I))^2$$

(13)

With these three data, the similarity can be calculated simply and at high speed according to an equation

$$M_{AC}=\cfrac{\alpha}{\{\gamma-(\beta^2/N)\}^{1/2}}$$

(14)

In other words, by using the equations (10), (11), (12), (13) and (14), it is possible to obtain real-time processing and realize high speed processing.

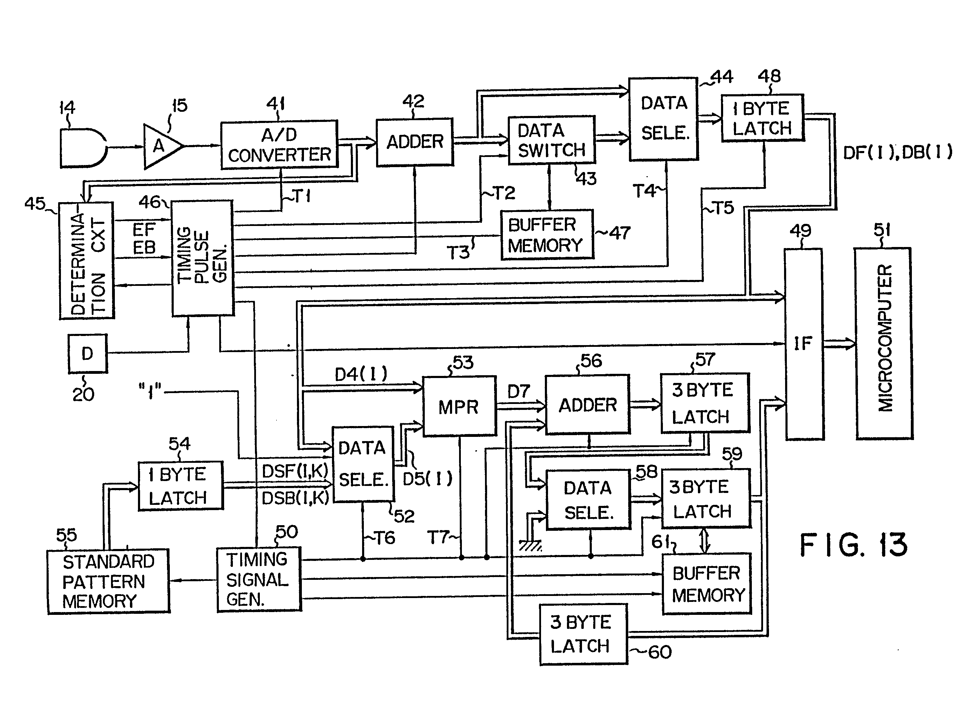

Fig. 13 shows the circuit of a currency not identification system which is based upon the principles discussed above. Basically, the circuit of Fig. 13 is the same as the embodiment of Fig. 9, and like parts are designated by like reference numerals. In this embodiment, the line sensor 14 provides a scanning signal V(i) [i=1 to 512] including 512 picture element signals corresponding to respective picture elements for every scanning. The scanning signal V(i) is coupled through the amplifier 15 to the A/D converter 41, which converts the individual component picture element signals at levels corresponding to the intensity of light incident on the picture elements of the line sensor into corresponding 8-bit digital picture element signals. These 512 digital picture element signals are inputted to the adder 42 and the signal detection area determination circuit 45. The average value of these picture element signals is calculated by the adder 12. The digital signal D(i) presenting the average value, obtained from the adder 42, is supplied to data switch 43 and data selector 44. The data switch 43 is switched in response to the timing pulse $T_2$ to transfer the output signal D(i) of the adder 42 to the buffer memory 47 or transfer the data D(i) stored in the buffer memory 47 to the data selector 44. The data selector 44 selects the signal $D_1(i)$ and supplies it to the latch circuit 48 for a first period $T_F$ and selects the signal $D_2(i)$ read out from the buffer memory 47 and supplied to the latch circuit 48 for a second period $T_B$ in response to the timing pulse $T_4$. The latch circuit 48 provides N/2 sampled data DF(J) for the 50 points from the start point $Q_S$ for the first period $T_F$ and N/2 sampled data DB(L) for the 50 points from the end point $Q_E$ in response to the timing pulse $T_5$. The latch circuit 48 supplies the signals DF(I) and DB(I) in response to the timing pulse $T_5$. The data selector 54 selects signal DF(I), signal DSF (I, K) and decimal signal "1" and supplies a signal D5(I) under the control of the timing pulse T6. As the signal DSF(I, K) are provided K different standard pattern data (calculated according to the equation (10)) stored in the standard pattern memory 55. The multiplier 52 first calculates the product of DF(I) and DF(I), i.e., $DF(I)^2$, then DF(I) and then product of DF(I) and DSF(I, K), i.e., $DF(I)\cdot DSF(I, K)$. It provides the result as a signal D7, which is processed through the adder 56, latch circuit 57, data selector 58, latch circuits 59 and 60 and buffer memory 61 to obtain the product sum of the signal D7. Then signals QF, DF and RF(K) are calculated according to equations

$$QF=\sum\limits_{I=1}^{50}(DF(I))^2$$

(15)

$$DF=\sum\limits_{I=1}^{50}DF(I)$$

(16)

and

$$RF(K)= \sum_{I=1}^{50} DF(I) \cdot DSF(I, K) \qquad (17)$$

The signals QF, DF and RF(K) thus obtained are transferred through the interface circuit 40 to the microcomputor 51, which calculates the similarity MF(K) from the aforementioned signals QF, DF and RF(K) according to an equation

$$MF(K)=RF(K)/(QF-\{(PF)^2/N\})^{1/2}$$

The sampled data DF(I) is used when producing the standard pattern data DSF(I, K).

The similarity MF(K) obtained in the above way is that with respect to a predetermined area from the leading edge of the printed section of the currency note, and the similarity with respect to a predetermined area from the trailing edge is obtained similar to MF(K). In this case, the data DB(I) and DSB are used in the calculation.

From MF(K) and MB(K) calculated in the above way, the overall similarity M(K) is calculated from the ((MF(K)+MS(K))/2 to detect the standard pattern data for which M(K) is maximum, and the kind of the currency note examined is determined from this standard pattern data. If M(K) is less than a limit value, for instance 0.6, the examined currency note is rejected as it corresponds to one of the currency notes represented by the standard pattern data.

As has been described in the foregoing, with the currency note identification system according to the invention, the characteristic of a portion of a scanning signal obtained by scanning a printed matter, particularly a currency note, being examined is detected, the characteristic of a predetermined portion of the scanning signal of the currency note from the point corresponding to the aforementioned detected portion of the scanning signal is detected, the similarity of the characteristic of the detected scanning signal is compared to that of a standard scanning signal, and the kind and/or genuineness of the examined currency note is determined from the calculated similarity, so that it is possible to obtain high performance identification so as to the kind and/or genuineness of the currency note without substantially being affected by contaminations, shrinkage, wrinkles, creases, etc.

While in the above embodiments the identification information is detected from the leading or trailing edge of the printed section of the currency note as the start point, it is also possible to detect the identification information from a particular point within the printed section as the start point. Further, according to the invention it is possible to identify not only currency notes but also other printed matter requiring identification such as securities. Further, while a line sensor has been used as means for providing the scanning signal, it is also possible to use a two-dimensional scanning device such as a video camera as well.

## Claims

1. A printed matter identification system, comprising:
   1. transport means for moving the printed matter in a first direction (y),
   2. scanning means (12, 14) comprising:
      2.1 a light beam source (13) for emitting a light beam directed to the matter (11) and scanning successive lines of the printed matter (11) in a direction perpendicular to the first direction (y),
      2.2 a light sensor (14) receiving the reflected light beam and converting said reflected light beam into a pattern data corresponding to at least a portion of the moving printed matter,
   3. a bill edge sensor (20) producing an output when detecting the edge of the bill and located transversely to the motion axis (y),
   4. standard data generating means (24, 28) for generaitng data corresponding to a standard pattern of standard printed matters (11),
   5. identification means, comprising:
      5.1 storage means (47) for retaining the scanned pattern information,
      5.2 memory means (55) for storing the standard pattern data,
      5.3 comparison means (23) for comparing the scanned pattern information from the storage means with the stored standard data from the memory means in synchronism with the bill edge sensor, and producing an output signal upon occurrence of predetermined amount of information, and
      5.4 processing means (49, 51) analysing said output signal and calculating the similarity from the printed matter being checked and the standard pattern data, characterized in that the system furthermore comprises:
   6. pattern edge detecting means (23—28, 45) detecting at least one pattern edge data component corresponding to at least one pattern edge of the printed matter (11) by differentiating the scanned pattern signal;
   7. summing means (25) for summing the picture element signals in each of the scanning signals for each successive scanning line;
   8. characteristic pattern data detecting means (48) which detect characteristic pattern data corresponding to a predetermined area from the detected pattern edge in response to the pattern edge component, and
   9. characterized in that the comparison means (23) are branched in such a manner that the summed characteristic pattern data for each scanning line is comparised with the memorised standard pattern data.

2. A printed matter identification system according to claim 1, characterized in that said pattern edge detecting means comprises means (26) for counting the characteristic component elements of the input pattern data in each scanning line and means (27) for comparing the count number with the standard number corresponding to the pattern edge.

3. A printed matter identification system according to claim 2, characterized in that said count number corresponds to the density changes of the printed pattern edge.

4. A printed matter identification system according to claim 1, characterized in that said scanning means (14, 41) produces a plurality of scanning line pattern data corresponding to the scanning lines and represented by multi-value; that summing means (42) is provided for summing the picture element data components included in each of the scanning line pattern data from said scanning means (14, 41) and generating successive sum signals as examined multi-value data for each of said scanning signals; that said pattern edge detecting means (23 to 28) detects a multi-value data corresponding to the pattern edge of the printed pattern from the multi-value data; and that said processing means (51) calculates the similarity from the multi-value pattern data and the standard data.

5. A printed matter identification system according to claim 4, characterized in that said pattern edge detecting means (23 to 28, 45) is a means for detecting a multi-value data corresponding to a plurality of pattern edges and said characteristic pattern data detecting means (48) detects the characteristic pattern data corresponding to a plurality of predetermined areas from the pattern edges in response to the multi-value and supplies the characteristic data to said processing means (51).

6. A printed matter identification system according to claim 5, characterized in that said processing means (51) includes means (66, 67) for deciding similarities of respective characteristic data corresponding to the respective predetermined areas, and means (68) for combining said similarities and detecting a similarity for which a maximum value is obtained.

7. A printed matter identification system according to claim 5, characterized in that said examined printed matter (11) has a leading edge and a trailing edge of a printed section, and that said pattern edge detecting means (23 to 28, 45) determines said leading and trailing edges by detecting the multi-value data corresponding to said leading and trailing edges.

8. A printed matter identification system according to any one of claims 4 to 7, characterized in that said processing means (51) calculates a similarity of a direct current component of the multi-value data.

9. A printed matter identification system according to any one of claims 4 to 7, characterized in that said processing means (51) calculates a similarity of an alternating current component of the multi-value data.

10. A printed matter identification system according to claim 4, characterized in that said scanning means includes transfer means (12) for transferring said printed matter in a first direction and one-dimensional scanning means (14) for generating scanning signals for scanning lines extending in a second direction perpendicular to said first direction.

11. A printed matter identification system according to any one of claims 4 to 6, characterized in that said scanning means (14) is a two-dimensional scanning means.

12. A printed matter identification system according to claim 10, characterized in that said processing means (51) performs the calculation of the similarity of the leading area detected from the leading edge immediately after detection of the leading area, while performing a calculation of the similarity of a trailing area detected from the trailing edge.

13. A printed matter identification system according to any one of claims 5, 6 and 8, characterized in that said pattern edge detecting means comprises means (26) for detecting and counting those of the picture element components of one of the scanning lines which have a level over a predetermined signal level.

**Patentansprüche**

1. System zum Identifizieren von Drucksachen (Banknoten), umfassend
   1. eine Fördereinheit zum Bewegen der Drucksache in einer ersten Richtung (y),
   2. eine Abtasteinrichtung (12, 14) mit
      2.1 einer Licht(strahl)quelle (13) zum Emittieren eines zur Drucksache (11) gerichteten Lichtstrahls und zum Abtasten aufeinanderfolgender Zeilen (oder Linien) der Drucksache (11) in einer Richtung senkrecht zur ersten Richtung (y), (und)
      2.2 einem Lichtsensor (14), der den reflektierten Lichtstrahl empfängt und den reflektierten Lichtstrahl in (eine) Musterdaten (einheit) entsprechend zumindest einem Abschnitt der sich bewegenden Drucksache umwandelt,
   3. einen Banknoten-Randsensor (20), der ein Ausggssignal liefert, wenn er die Kante der Banknote feststellt, und der quer zur Bewegungsachse (y) angeordnet ist,
   4. eine Standarddaten-Erzeugungseinrichtung (24, 28) zur Erzeugung von Daten entsprechend einem Standardmuster von Standard-Drucksachen (11), (und)
   5. eine Identifiziereinheit mit
      5.1 einer Speichereinheit (47) zum Halten (Speichern) der Abtastmusterinformation,
      5.2 einer Speichereinheit (55) zum Speichern der Standardmusterdaten,
      5.3 einer Vergleichereinheit (28) zum Vergleichen der Abtastmusterinformation aus der Speichereinheit mit den (ab)gespeicherten Standarddaten von der Speichereinheit in Synchronismus mit dem Banknoten-Randsensor und zum Liefern eines Ausgangssignals beim Auftreten einer vorbestimmten Informationsgröße sowie

5.4 einer Verarbeitungseinrichtung (49, 51) zum Auswerten des Ausgangssignals und Berechnen der Ähnlichkeit (oder Entsprechung) anhand der erfaßten Drucksache und der Standardmusterdaten, gekennzeichnet durch

6. eine Musterrand - Erfassungseinrichtung (23—28, 45) zum Erfassen mindestens einer Musterrand-Datenkomponente entsprechend mindestens einem Musterrand (einer -kante) der Drucksachse (11) durch Differenzierung des Abtastmustersignals,

7. eine Summiereinheit (25) zum Summieren der Bildelementsignale in jedem der Abtastsignale für jede aufeinanderfolgende Abtastzeile, sowie)

8. eine Kennmusterdaten-Erfassungseinheit (48), welche charakteristische Musterdaten (oder Kennmusterdaten) entsprechend einer vorbestimmten Fläche vom erfaßten Musterrand (ausgehend) nach Maßgabe der Musterrandkomponente erfaßt, und

9. weiterhin dadurch gekennzeichnet, daß die Vergleichereinheit (23) derart verzweigt ist, daß die summierten charackteristischen Musterdaten für jede Abtastzeile mit den (ab)gespeicherten Standardmusterdaten verglichen werden.

2. System zum Identifizieren von Drucksachen nach Anspruch 1, dadurch gekennzeichnet, daß die Musterrand-Erfassungseinrichtung eine Einheit (26) zum Zählen der charackteristischen Komponentenelemente der Eingangsmusterdaten in jeder Abtastzeile und eine Einheit (27) zum Vergleichen der Zählungszahl mit der dem Musterrand entsprechenden Standardzahl aufweist.

3. System zum Identifizieren von Drucksachen nach Anspruch 2, dadurch gekennzeichnet, daß die Zählungszahl den Dichteänderungen der Kante oder des Rands des Aufdruckmusters entspricht.

4. System zum Identifizieren von Drucksachen nach Anspruch 1, dadurch gekennzeichnet, daß die Abtasteinrichtung (14, 41) eine Anzahl von Abtastzeilen-Musterdaten liefert, die den Abtastzeilen entsprechen und durch mehrere Größen repräsentiert sind, daß eine Summiereinheit (42) vorgesehen ist zum Summieren der Bildelement-Datenkomponenten, die in jeder der Abtastzeilen-Musterdateneinheiten von der Abtasteinrichtung (14, 41) enthalten sind, und zum Erzeugen aufeinanderfolgender Summensignale als untersuchte Mehrgrößendaten für jedes der Abtastsignale, daß die Musterrand-Erfassungseinrichtung (23—28) (eine) Mehrgrößendaten(einheit) entsprechend dem Musterrand des Aufdruckmusters anhand der Mehrgrößendaten erfaßt und daß die Verarbeitungseinheit (51) die Ähnlichkeit (oder Entsprechung) anhand der Mehrgrößen-Musterdaten und der Standarddaten berechnet.

5. System zum Identifizieren von Drucksachen nach Anspruch 4, dadurch gekennzeichnet, daß die Musterrand-Erfassungseinrichtung (23—28, 45) eine Einrichtung zum Erfassen von (einer) Mehrgrößendaten(einheit) entsprechend einer Anzahl von Musterrändern ist und die Kennmusterdaten-Erfassungseinheit (48) die charakteristichen Musterdaten entsprechend einer Anzahl vorbestimmter Flächen von den Musterrändern (ausgehend) nach Maßgabe der mehreren Größen (multi-value) erfaßt und die charakteristischen Daten zur Verarbeitungseinheit (51) liefert.

6. System zum Identifizieren von Drucksachen nach Anspruch 5, dadurch gekennzeichnet, daß die Verarbeitungseinheit (51) Einrichtungen (66, 67) zum Entscheiden der Ähnlichkeiten (oder Entsprechungen) von jeweiligen charakteristischen Daten entsprechend den jeweiligen vorbestimmten Flächen und eine Einheit (68) zum Kombinieren der Ähnlichkeiten und zum Erfassen einer Ähnlichkeit, für die eine maximale Größe erzielt wird, aufweist.

7. System zum Identifizieren von Drucksachen nach Anspruch 5, dadurch gekennzeichnet, daß die untersuchte Drucksache (11) eine vorlaufende Kante und eine nachlaufende Kante eines Aufdruckteils aufweist und daß die Musterrand-Erfassungseinrichtung (23—28, 45) vorlaufende und nachlaufende Kante durch Erfassung der Mehrgrößendaten entsprechend der vorlaufenden und der nachlaufenden Kante bestimmt.

8. System zum Identifizieren von Drucksachen nach einem der Ansprüche 4 bis 7, dadurch gekennzeichnet, daß die Verarbeitungseinheit (51) eine Ähnlichkeit (oder Entsprechung) einer Gleichstromkomponente der Mehrgrößendaten berechnet.

9. System zum Identifizieren von Drucksachen nach einem der Ansprüche 4 bis 7, dadurch 'gekennzeichnet, daß die Verarbeitungseinheit (51) eine Ähnlichkeit (oder Entsprechung) einer Wechselstromkomponente der Mehrgrößendaten berechnet.

10. System zum Identifizieren von Drucksachen nach Anspruch 4, dadurch gekennzeichnet, daß die Abtasteinrichtung eine Überführungseinheit (12) zum Überführen der Drucksache in einer ersten Richtung und eine eindimensionale Abtasteinheit (14) zum Erzeugen von Abtastsignalen für Abtastzeilen, die sich in einer zweiten Richtung senkrecht zur ersten Richtung erstrecken, aufweist.

11. System zum Identifizieren von Drucksachen nach einem der Ansprüche 4 bis 6, dadurch gekennzeichnet, daß die Abtasteinheit (14) eine zweidimensionale Abtasteinheit ist.

12. System zum Identifizieren von Drucksachen nach Anspruch 10, dadurch gekennzeichnet, daß die Verarbeitungseinheit (51) die Berechnung der Ähnlichkeit (oder Entsprechung) der von der vorlaufenden Kante (aus) erfaßten vorlaufenden Fläche unmittelbar nach der Erfassung der vorlaufenden Kante ausführt, während sie eine Berechnung der Ähnlichkeit einer von der nachlaufenden Kante (aus) erfaßten nachlaufenden Fläche ausführt.

13. System zum Identifizieren von Drucksachen nach einem der Ansprüche 5, 6 und 8, dadurch gekennzeichnet, daß die Musterrand-Erfassungseinrichtung eine Einheit (26) zum Erfassen und Zählen derjenigen Bildelementkomponenten einer der Abtastzeilen, die einen Pegel (oder eine Größe) über einem vorbestimmten Signalpegel besitzen, aufweist.

## Revendications

1. Un système d'identification d'articles imprimés, comportant:

1. des moyens de transport pour déplacer l'article imprimé, dans une première direction (y),

2. des moyens d'exploration (12, 14) comportant:

2.1 une source (13) de faisceau de lumière pour émettre un faisceau de lumière dirigé sur l'article (11) et pour balayer des lignes successives de l'article imprimé (11) dans une direction perpendiculaire à la première direction (y),

2.2 un détecteur de lumière (14) recevant le faisceau de lumière réfléchi et convertissant ledit faisceau de lumière réfléchi en des données de motif correspondant à au moins une partie de l'article imprimé mobile,

3. Un détecteur (20) de bord de billet produisant un signal de sortie à la détection du bord de billet et situé transversalement à l'axe de déplacement (y),

4. Des moyens (24, 28) de génération de données de norme pour engendrer des données correspondant à un motif de norme des articles imprimés normalisés (11),

5. Des moyens d'identification comportant:

5.1 des moyens de stockage (47) pour retenir l'information de motif exploré,

5.2 des moyens à mémoire (55) pour mémoriser les données de motif de norme,

5.3 des moyens de comparaison (23) pour comparer l'information de motif exploré provenant des moyens de stockage avec les données normalisées mémorisées provenant des moyens à mémoire en synchronisme avec le détecteur de bord le billet, et pour produire un signal de sortie quand il se produit une quantité prédéterminée d'informations, et

5.4 des moyens de traitement (49, 51) analysant ledit signal de sortie et calculant la similitude entre l'article imprimé en cours de vérification et les données de motif normalisé, caractérisé en ce que le système comporte en outre:

6. Des moyens (23—28, 45) de détection du bord du motif qui détectent au moins une composante des données de bord de motif correspondant à au moins un bord de motif de l'article imprimé (11) par différenciation du signal de motif exploré;

7. Des moyens de sommation (25) pour additionner les signaux d'élément d'image de chacun des signaux d'exploration pour chaque ligne successive d'exploration;

8. des moyens (48) de détection des données de motif caractéristique qui détectent les données de motif caractéristique correspondant à une zone prédéterminée à partir du bord du motif détecté, en réponse à la composante de bord de motif, et

9. caractérisé en ce que les moyens de comparaison (23) sont branchés de telle manière que les données additionnées de motif caractéristique pour chaque ligne d'exploration sont comparées avec les données mémorisées de motif normalisé.

2. Un système d'identification d'articles imprimés selon la revendication 1, caractérisé en ce que lesdits moyens de détection de bord de motif comportent des moyens (26) pour compter les éléments de composante caractéristique des données entrantes de motif dans chaque ligne d'exploration et des moyens (27) pour comparer le nombre de compte avec le nombre normalisé correspondant au bord du motif.

3. Un système d'identification d'article imprimés selon la revendication 2, caractérisé en ce que ledit nombre de compte correspond aux changements de densité du bord du motif imprimé.

4. Un système d'identification d'articles imprimés selon la revendication 1, caractérisé en ce que lesdits moyens d'exploration (14, 41) produisent une pluralité de données de motif de lignes d'exploration correspondant aux lignes d'exploration et représentées par plusieurs valeurs; en ce que des moyens de sommation (42) sont prévus pour additionner les composantes de données d'éléments d'image comprises dans chacune des données de motif de lignes d'exploration provenant desdits moyens d'exploration (14, 41) et pour engendrer des signaux successifs de somme en tant que données de mutli-valeurs examinées pour chacun desdits signaux d'exploration; en ce que lesdits moyens (23 à 28) de détection de bord de motif détectent des données de multi-valeurs correspondant au bord du motif du motif imprimé à partir des données de multi-valeurs; et en ce que lesdits moyens de traitement (51) calculent la similitude entre les données de motif de multi-valeurs et les données normalisées.

5. Un système d'identification d'articles imprimés selon la revendication 4, caractérisé en ce que lesdits moyens (23 à 28, 45) de détection de bord de motif sont constitués par des moyens pour détecter des données de multi-valeurs correspondant à une pluralité de bords de motif, et lesdits moyens (48) de détection des données de motif caractéristique détectent les données de motif caractéristique correspondant à une

pluralité de zones prédéterminées à partir des bords de motif en réponse aux multi-valeurs et délivrant les données caractéristiques auxdits moyens de traitement (51).

6. Un système d'identification d'articles imprimés selon la revendication 5, caractérisé en ce que lesdits moyens de traitement (51) comportent des moyens (66, 67) pour décider des similitudes des données caractéristiques respectives correspondant aux zones prédéterminées respectives, et des moyens (68) pour combiner lesdites similitudes et détecter une similitude pour laquelle une valeur maximale est obtenue.

7. Un système d'identification d'articles imprimés selon la revendication 5, caractérisé en ce que ledit article imprimé examiné (11) présente un bord avant et un bord arrière d'une partie imprimée, et en ce que lesdits moyens (23 à 28, 45) de détection de bord de motif déterminent lesdits bords avant et arrière en détectant les données de multi-valeurs correspondant auxdits bords avant et arrière.

8. Un système d'identification d'articles imprimés selon l'une quelconque des revendications 4 à 7, caractérisé en ce que lesdits moyens de traitement (51) calculent une similitude d'une composante de courant continu des données de multi-valeurs.

9. Un système d'identification d'articles imprimés selon l'une quelconque des revendications 4 à 7, caractérisé en ce que lesdits moyens de traitement (51) calculent une similitude d'une composante de courant alternatif des données de multi-valeurs.

10. Un système d'identification d'articles imprimés, selon la revendication 4, caractérisé en ce que lesdits moyens d'exploration comportent des moyens de transfert (12) pour transférer ledit article imprimé dans un première direction et des moyens d'exploration uni-dimensionelle (14) pour engendrer des signaux d'exploration pour les lignes d'exploration s'étendant dans une seconde direction perpendiculaire à ladite première direction.

11. Un système d'identification d'articles imprimés selon l'une quelconque des revendications 4 à 6, caractérisé en ce que lesdits moyens d'exploration (14) sont des moyens d'exploration à deux dimensions.

12. Un système d'identification d'articles imprimés selon la revendication 10, caractérisé en ce que lesdits moyens de traitement (51) effectuent le calcul de la similitude de la zone avant détectée à partir du bord avant immédiatement après la détection de la zone arrière, tout en effectuant un calcul de la similitude de la zone arrière détectée à partir du bord arrière.

13. Un système d'identification d'articles imprimés selon l'une quelconque des revendications 5, 6 et 8, caractérisé en ce que lesdits moyens de détection de bord de motif comportent des moyens (26) pour détecter et compter celles des composantes d'élément d'image de l'une des lignes de balayage qui présentent un niveau situé au-dessus d'un niveau de signal prédéterminé.

# FIG. 1

# FIG. 3

F I G. 2

0 067 898

# FIG. 4

| PICTURE ELEMENT NO. | 51 | 52 | 53 | 54 | 55 | 56 | 57 | i | 59 | 60 | 61 | 62 | 63 | 64 | 65 | 66 | 67 | 68 | 69 |
|---|---|---|---|---|---|---|---|---|---|---|---|---|---|---|---|---|---|---|---|
| D(i) | 200 | 201 | 180 | 200 | 201 | 199 | 195 | 160 | 158 | 159 | 158 | 157 | 156 | 192 | 197 | 200 | 200 | 200 | 200 |
| S(i) | 2 | 1 | 0 | 19 | 14 | 46 | 82 | 77 | 38 | 3 | 4 | 31 | 76 | 86 | 52 | 9 | 1 | 0 | |
| C(i) (≧50) | 0 | 0 | 0 | 0 | 0 | 0 | 1 | 1 | 0 | 0 | 0 | 0 | 1 | 1 | 1 | 0 | 0 | 0 | 0 |

V(t)

FIG. 5

y

x

11a

11b

11c

11d

11e

THE UNITED STATES OF AMERICA

B 99855135 C

ONE

B 99855135 C

ONE DOLLAR

PO-1
PO-2

PO-3

(x0, y0)

D STATES OF

11e

FIG. 6

X

55 56 57 xi 59 60 61

128

(x0, y0)

(x2, y2)

| O | O | O | O | O | O | O | O | O | O | O | O | O | O | O | O | O |
|---|---|---|---|---|---|---|---|---|---|---|---|---|---|---|---|---|
| O | O | 1 | 1 | O | 1 | 1 | O | 1 | 1 | 1 | O | 1 | 1 | 1 | O | O |
| O | O | O | O | O | O | O | O | O | O | O | O | O | O | O | O | O |
| 1 | 1 | 1 | O | 1 | 1 | O | O | 1 | 1 | O | 1 | 1 | 1 | O | 1 | 1 |
| O | O | O | O | O | O | O | O | O | O | O | O | O | O | O | O | O |
| O | O | O | O | O | O | 1 | O | O | O | O | O | O | 1 | O | O | O |

PO'-1

PO'-2

PO'-3

y

yi

(x1, y1)

# FIG. 7

S(I)

(a) M≃1
D(I)

S(I)

(b) M<0.5
D(I)

S(I)

(c) M<0.5
D(I)

# FIG. 8

D(I)

QS    QE
SL

TF                              TB

|||||---------------|||||
1 3 5              97 99
 2 4 6            96 98 100

DF(J)            DB(L)

J = |||||---|||
    123456   4950
              5049      54321  = L

FIG. 9

# F I G. 10

# F I G. 11

# F I G. 12

FIG. 13